# EUROPEAN PATENT SPECIFICATION

(11) **EP 0 484 283 B1**
(45) Date of publication and mention of the grant of the patent: **08.04.1998**
(21) Application number: 91830309.0
(22) Date of filing: 11.07.1991
(51) Int. Cl.: C04B 28/04

(54) **Manufacturing of fibrocement articles without asbestos fibre**
Herstellung von Faserzement ohne Asbestfasern
Production de ciment de fibres sans fibres d'amiante

(30) Priority: 26.10.1990 IT 522890
(43) Date of publication of application: 06.05.1992
(73) Proprietor: SOCIETA' ITALIANA LASTRE S.p.A., 25028 Verolanuova (Brescia) (IT)
(72) Inventor: Teppa, Franco, I-25028 Verolanuova (Brescia) (IT)
(74) Representative: Manzoni, Alessandro

(56) References cited:
- EP-A- 0 015 538
- EP-A- 0 047 158
- GB-A- 1 498 966
- GB-A- 2 083 512
- JP-A-61 026 544
- JP-A-61 031 337
- WORLD PATENTS INDEX LATEST Week 8435, Derwent Publications Ltd., London, GB;
- WORLD PATENTS INDEX LATEST Week 8835, Derwent Publications Ltd., London, GB;
- CHEMICAL ABSTRACTS, vol. 105, no. 10, 8 September 1986, Columbus, Ohio, US; abstract no. 84269S, page 346 ;
- CHEMICAL ABSTRACTS, vol. 105, no. 8, 25 August 1986, Columbus, Ohio, US; abstract no. 65386M, page 306 ;

## Description

The present invention relates to fibrocement materials and more in particular to a process for the construction of articles, such as slabs, in fibrocement without asbestos fibres.

On one hand, the production of slabs in asbestos cement using a mixture of cement and asbestos fibres diluted in water, usually with a water/cement ratio of approximately 10, is well established, the asbestos fibres acting as both process and reinforcement fibres.

On the other hand, it is known that the use of asbestos fibres, even in construction materials, is forbidden in certain countries for sanitary and ecological reasons.

For this reason researches have been carried out for alternative solutions to asbestos cement construction materials without asbestos fibres.

Different solutions to the problem have been suggested in the British patents 1,605,004, 2,012,831, 2,073,317 and in the European patent specification 0,047,158. Each of these solutions requires the realization of fibro cement materials which substantially include particular cellulose fibres as process and reinforcement components. Their use can assure that the product which is still at the plastic stage has to be pressed and stabilized in autoclaves with saturated steam at a temperature of approximately 180° and pressure of approximately 10 Atm.

More in particular, in the Italian patent 1.128.037 a process for the manufacturing of a hydraulically set material reinforced with fibres is claimed, characterized in that the fibres include 2 to 20% in volume, as solids, of filtering or processing fibres and 1 to 10% in volume, as solids, of reinforcement fibres. Both types of fibres are put through a pre-treatment which tends to increase the dispersion in the suspension. This pre-treatment of the fibres is designed to make at least one compound, a salt, precipitate in or on the fibres so that they are combined with a first saline compound solution and then brought in contact with a second saline compound.

The process is therefore laborious, onerous and in practice uses:
- filtering or process fibres which allow the use of traditional machines for manufactured articles in fibrocement reinforced with asbestos fibres; and
- reinforcement fibres which grant the mechanical-physical characteristics required by the manufactured articles.

Thus, cellulose, waste paper, woolen fibres, silk, polyproylene fibres, rock wool and kaolin wool are used as process fibres and steel, carbon, glass, polypropylene, polyvinyl-alcohol, polyester, polyamides and polyacrylic are used as reinforcement fibres.

In each case, said fibres require a specific preliminary chemical treatment and the addition of a flocculator able to improve the retention of the solid particles for their dispersion in the mixture.

In practice, so as to achieve a positive result, the percentage of process and reinforcement fibres immersed in the dry mixture is usually high with respect to the one relating to asbestos fibres in articles manufactured with these fibres, even if this is not so in said Italian patent application. In particualar, these percentages are approximately 7-8% in weight for process fibres and approximately 2-3% for reinforcement fibres, which in volume correspond to 14-16% and 4-6%, respectively.

It should therefore be noted that the specific gravity of these fibres is about half that of asbestos which, when going in the initial dry mixture, usually is about 11%, in weight. These alternative fibres therefore give the product, due to their high volume, a very low density (about 1.2 ö 1.3 g/cm3 against 1.6 ö 2 g/cm3 of the asbestos cement), thus achieving a low bending strength after the finished product has been immersed in water, in accordance with various European Standards.

It is therefore necessary to work on the material being manufactured when it is still at the plastic stage with a pressing action of about 20̸0̸ - 250̸ kg/cm2 so as to bring the density to 1.5 - 1.6 g/cm3.

Also in GB-A-1 498 966 an article is disclosed as formed from a composition comprising a water-settable inorganic binder which is one or more of a calcium silicate binder. Portland cement, aluminous cement and blast furnace slag cement, fibrous reinforcing material comprising cellulosic fibres and mica.
However this execution uses calcium silicate binder and polyamide and polypropilene fibres and it requires a setting of the binder by an autoclaving reaction or by air curing.
In the documents Chemical Abstract 10̸5(1986)8 abstract n.84269s and GB 2 0̸83 512 are disclosed asbestos-free articles made from compositions comprising specific quantity of cellulosic fibres, mica, reinforcement fibres, cement and floculator. But they do not disclose any preliminary treatment and mechanical opening in a water solution of the cellulosic fibres nor a final thermal seasoning of product in a chamber at controlled temperature.

In addition, the results of the known techniques are not completely positive and reliable, especially because the cellulose contents (especially if in large quantities) is negative for the duration of the product and causes shrinkages of the slabs and their cracking, especially during very hot and dry weather.

Slabs of fibrocement which can be considered of a certain durability are those with:
- a minimum percentage of cellulose in the mixture so as to have a good retention of the cement particles during the slab forming process;
- a specific gravity of the slab of approximately 1.4 g/cm3 so as to have a good resistency against freezing;
- the presence in the mixture of primary substances of components to sufficiently contrast the tension of the shrinkages caused by cellulose in the mixtures, and
- a particular seasoning of the product in a conditioning chamber with controlled temperature and humidity.

The object of the present invention is to solve the problem of the production of articles in fibrocement without any asbestos in a new and original way, keeping in mind the above mentioned requirements and with a new formulation of the process and reinforcement components.

It is in fact an object of the present invention to allow the manufacture of articles with mechanical-physical characteristics similar to those of materials containing asbestos, but also withouth coming across inconveniences, defects, limitations and unreliability of the manufactured articles proposed in the above mentioned publications and, advantageously, withouth having to carry out chemical treatments or pre-treatments, pressing operations and treatments in autoclaves.

Thus, in accordance with the present invention, a process is proposed for the production of shaped articles in fibrocement without asbestos fibres, which comprises:
(i) the formulation of a mixture with
   - cellulose fibres in a quantity of 2 to 5% by weight;
   - a filler material selected among micron-silicon, sepiolite or kaolin powders or fly ash, in a quantity of 5 to 10̸% by weight;
   - reinforcement fibres selected among polyvinyl alcohol based fibres and acrylic fibres about 6 mm in lenght, in a quantity of 1 to 3% by weight;
   - an agent for contrasting the tension due the expansion of the finished article, selected between wollastonite and mica in the form of acidulate, in a quantity of 5 to 10̸% by weight;
   - Portland 325 cement as necessary;
   - a floculant in water;
   and after the articles have been shaped;
(ii) a final thermal conditioning for a seasoing of the articles effected by passing the article through a thermally conditioning chamber with a first area at about 30-40°C, a second area at about 50-60°C, and a final area at about 70-80°C, the treatment being carried out for a total duration of approximately 10 hours in an environment with high humidity.

The low percentage of cellulose fibres improves the durability of the manufactured articles and reduces their risk of cracking due to shrinkages or thermal expansions. A weight percentage of 2 to 5%, preferably of 3 to 4% is retained to be the most satisfactory.

Furthermore, in accordance with the invention, said fibres are put through a preliminary mechanical treatment so as to achieve an optimal opening of the fibres themselves through a defibrating refiners which operate on cellulose in an acqueous solution containing 4 - 5% of cellulosic fibres until it reaches a drainage value of 50̸-70̸° Shopper Riegler.

This drainage value is considered as being important so as to achieve a good retention of the cement particles in the Hatschek forming machine.

The addition of micro-silicon, sepiolite or kaoline powders or fly ash in a quantity of 5 to 10% in weight, preferably 7 to 8%, will give the layered damp material a good plasticity during the forming of the article which is necessary for its shape, especially when regarding corrugated slabs, as well as obtaining a good adhesion between the various layers of laminations, avoiding the delamination of the same as they are usually made up of various layers.

Polyvinyl-alcohol based fibres and/or acrylic fibres of approximately 6 mm in length to a weight of 1-3%, preferably of 1.5-2.5%, are used as reinforcement fibres.

Wollastonite and/or mica of the above mentioned percentages are preferably used as tension contrasting agents. Infact, said powders in the form of acidulate constitute a micro-reinforcement inside the final mass which impedes any micro-flaws in the manufactured article.

The Portland cement used could contain a siliceous load and on the other hand the addition of a flocculator in water further improves the filtration properties of the formulated mixture.

Finally, the necessary thermal conditioning of seasoning of the manufactured articles is carried out in a chamber with a controlled temperature having a first area of 30 to 40°C, a second area of 50 to 60°C and a final area of 70 to 80°C.

The slabs remain inside the chamber for approximately 10 hours in an enviornment with high humidity so that the curing is achieved in the best possible way obtaining reliable and long lasting manufactured articles.

## Claims

1. A process for the production of shaped articles in fibrocement without asbestos fibres, comprising:
(i) the formulation of a mixture with
- cellulose fibres in a quantity of 2 to 5% by weight;
- a filler material selected among micron-silicon, sepiolite or kaolin powders or fly ash, in a quantity of 5 to 10% by weight;
- reinforcement fibres selected between polyvinyl alcohol based fibres and acrylic fibres about 6 mm in lenght, in a quantity of 1 to 3% by weight;
- an agent for contrasting the tension due to the expansion of the finished article, selected between Wollastonite and mica in the form of acidulate, in a quantity of 5 to 10% by weight;
- portland 325 cement as necessary;
- a flocculant in water;
and after the articles have been shaped;
(ii) a final thermal conditioning for a seasoning of the articles effected by passing the article through a thermally conditioning chamber with a first area at about 30-40°C, a second area at about 50-60°C, and a final area at about 70-80°C, the treatment being carried out for a total duration of approximately 10 hours in an environment with high humidity.

2. The process of claim 1 wherein cellulose fibres are put through a preliminary treatment and mechanically opened in a aqueous solution containing 4 to 5% of fibres until reaching a drainage value of 50 to 70% Shopper Riegler.

## Patentansprüche

1. Das Verfahren zur Herstellung geformter Artikel aus Eternit ohne Asbestfaser schließt folgendes ein:
(i) die Formulierung einer Mischung mit
- Zellulosefaser, deren Menge 2 bis 5% des Gewichts beträgt
- Füllmaterial, welches unter Mikron-Silikon, Sepiolith bzw. Kaolinpulver oder Flugasche gewählt wird. Menge: 5 bis 10% des Gewichts;
- Verstärkungsfaser, welche unter Fasern mit Polyvinylalkoholbase und Akrylbase mit einer Länge von 6 mm gewählt werden kann, Menge: von 1 bis 3% des Gewichts;
- Widerstandsmittel gegen die Spannung, die mit der Ausdehnung des Endprodukts verbunden ist. Dieses Mittel wird unter Wollastonit und Glimmer in der Form von Säure gewählt. Menge: von 5 bis 10% des Gewichts;
- Portlandzement 325 in der erforderlichen Menge;
- Flockungsmittel in Wasser.
Nach der Formung der Artikel findet folgendes Verfahren statt;
- (ii) Endwärmebehandlung zur Alterung der Artikel, indem die Artikel bei einer Temperatur von 30 bis 40°C durch den ersten Bereich der Wärmebehandlungskammer und danach bei 50 bis 60°C durch eine zweite Kammer sowie bei 70 bis 80°C durch eine dritte Kammer gehen. Die Behandlung dauert insgesamt 10 Stunden in einer sehr feuchten Umgebung.

2. Chemisches Verfahren 1; Zellulosefasern werden einer mechanischen Vorbehandlung unterzogen. Sie werden mechanisch geöffnet, indem sie in eine Wasserlösung getaucht werden, welche 4 bis 5% Fasern enthält, bis ein Dränierungswert von 50 bis 70% Shopper Riegler erreicht wird.

## Revendications

1. Procéde pour la fabrication d'articles façonnés en fibrociment sans fibres d'amiante, comprenant:
(i) la formulation d'un mélange de
- fibres de cellulose dans la mesure de 2 à 5% de poids;
- un matériau de remplissage pouvant être soit du micron-silicium soit des poudres de sépiolite ou de kaolin ou des cendres volatiles, dans la mesure de 5 à 10% du poids;
- fibres de renforcement pouvant être des fibres à base d'alcool de polyvinyle ou des fibres acryliques de 6 mm de long environ, dans la mesure de 1 à 3% du poids;
- un agent d'opposition à la tension due à la dilatation de l'article fini, pouvant être de la Wollastonite ou du mica sous forme acidulée, dans la mesure de 5 à 10% du poids;
- cément Portland 325 en quantité suffisante;
- un floculant en eau;
et, après que les articles ont été façonnés;
(ii) un traitement de conditionnement thermique final pour le vieillissement des articles réalisé en passant l'article dans une chambre de conditionnement thermique ayant une première section à 30-40°C environ, une deuxième section à 50-60°C environ et une section finale à 70-80°C environ, traitement dont la durée est de 10 heures environ et qui est réalisé dans un milieu à humidité élevée.

2. Procédé décrit par la revendication 1 dans lequel les fibres de cellulose font l'object d'un traitement préliminaire d'ouverture mécanique en solution aqueuse contenant 4 à 5% de fibres jusqu'à ce qu'elles atteignent une valeur de drainage de 50 à 70% Shopper Riegler.
